# EUROPEAN PATENT SPECIFICATION

(11) **EP 0 535 903 B1**
(45) Date of publication and mention of the grant of the patent: **10.04.1996**
(21) Application number: 92308845.4
(22) Date of filing: 29.09.1992
(51) Int. Cl.: H04B 1/38, H04M 1/02

(54) **Miniature portable radio communication apparatus**
Tragbares Miniaturfunkgerät
Appareil de radio-communication portable en miniature

(30) Priority: 30.09.1991 JP 276442/91
(43) Date of publication of application: 07.04.1993
(73) Proprietor: NEC CORPORATION, Tokyo (JP)
(72) Inventor: Nagai, Michio, c/o NEC Corporation, Minato-ku, Tokyo 108-01 (JP)
(74) Representative: Abnett, Richard Charles

(56) References cited:
- EP-A- 0 414 365
- DE-A- 3 836 406
- FR-A- 2 593 656
- US-A- 4 697 931

## Description

The present invention relates to a miniature portable radio communication apparatus.

A hand-held radio telephone or similar portable radio communication apparatus is generally made up of a radio unit, a sound transmitter, a sound receiver, an operating section including various keys or buttons, and a display for displaying various kinds of information including time. A prerequisite with this kind of apparatus is that the transmitter and the receiver match in position with the user's mouth and ear, respectively, resulting in a bulky and uneasy-to-carry configuration.

Various hand-held telephones have been proposed comprising a casing containing one of a sound transmitter and a sound receiver, a key operating section, and a display, and a movable member containing the other of the transmitter and the receiver and being slidable between two positions, in a first (extended) one of which the key operating section and the display are fully revealed to the user.

European Patent Application EP-A-0 414 365 describes such a radio telephone in which in the second (retracted) position all the numeric keys used for dialling are covered by the movable member, while the display remains fully uncovered.

German Patent Application DE-A-38 36 406 describes a radio telephone in which all the keys and the display are fully covered by the movable member in the retracted position. Since the display is concealed, the user is prevented from seeing the time or similar information.

French Patent Application FR-A-2 593 656 describes an infra-red telephone (Figs. 10 - 13) in which in the closed position all the keys and the display are likewise fully covered. This telephone also has an intermediate position in which the display is uncovered and the keys can be partially uncovered.

However, we have appreciated that all these types of radio apparatus have a problem, in that the keys cannot be operated when the apparatus is in the retracted position, i.e., the user has to extend the two parts every time the user desires to operate the keys.

The invention is defined in claim 1 below, to which reference should now be made. Advantageous features are set forth in the appendant claims.

In the invention, even when the movable member is fully received in the casing, the user (i) can operate keys arranged on the casing, and (ii) can see a minimum amount of information, since the display is partly exposed to the outside.

The invention will be described by way of example, with reference to the drawings, in which:-
**Figure 1** is a plan view showing a miniature radio communication apparatus embodying the present invention in a condition in which it is not used;
**Figure 2** is a rear view of the embodiment;
**Figure 3** is a side elevation of the embodiment;
**Figure 4** is a plan view showing the embodiment in a condition in which it is used; and
**Figure 5** is a front view of the embodiment held in the condition of Figure 4.

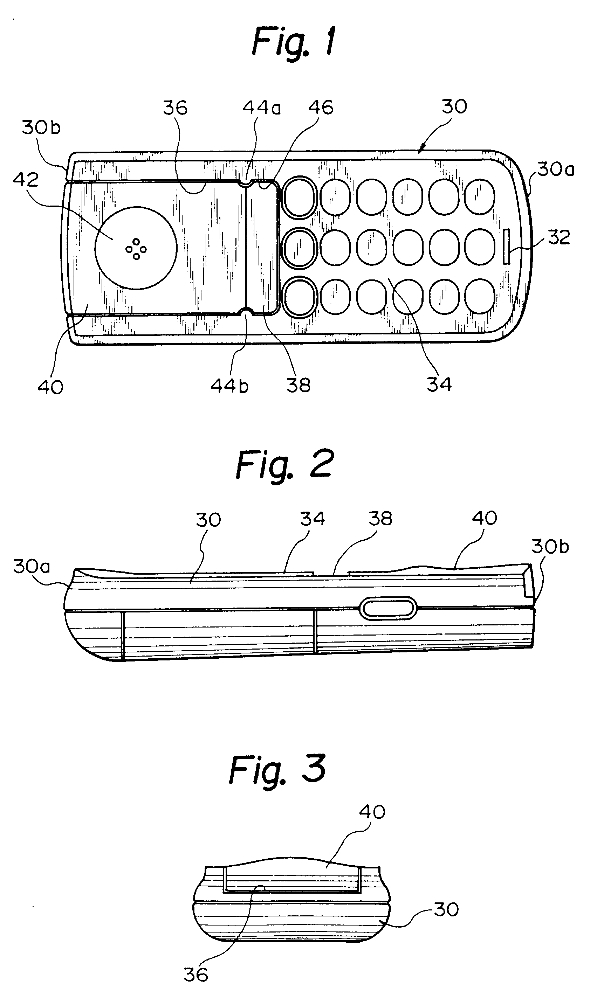

Referring to Figure 1, a miniature portable radio communication apparatus embodying the present invention is shown. Figures 2, 3, 4 and 5 each shows the embodiment in a particular view.

As shown in Figures 1 to 5, the apparatus has a casing 30. A transmitter 32 is mounted on the casing 30 near one end 30a of the latter. A key operating section, generally 34, is arranged over the area of the casing 30 extending from the transmitter 32 to substantially the center. The key operating section 34 includes dial keys and various function keys, e.g., a speed call key and a hold key. A recess is formed in the casing 30 to extend from the operating section 34 to the other end 30b of the casing 30 and is open at the end 30b. A display 38 is located on part of the bottom of the recess 36 which is close to the center of the casing 30. Opposite side walls of the recess 36 are formed with, for example, grooves. A movable member 40 is received in the recess 36 to be slidable back and forth along the grooves between two extreme positions. The movable member, or slider 40, is provided with a thin box-like configuration and carries a receiver 42 on the front thereof.

Stops in the form of lugs 44a and 44b protrude from the grooved walls of the recess 36 toward each other at a position adjacent to the center of the casing 30. The distance between the stops 44a and 44b and the end 30b of the casing 30 is selected to be substantially equal to the longitudinal dimension of the slider 40. In this configuration, when the slider 40 is pushed into the casing 30 until the stops 44a and 44b lock it, a clearance 46 is formed between the slider 40 and the casing 30, as seen in Figure 1. The display 38 is partly visible through the clearance 46.

Of course, the slider 40 and casing 30 are electrically connected to each other by, for example, a flexible cable, although not shown in the figures.

As shown in Figures 1 to 3, when the apparatus is not in use, the slider 40 is received in the recess 36 of the casing 30 to reduce the overall length of the apparatus. In this condition, part of the display 38 appears through the clearance 46 between the slider 40 and the casing 30, showing time or similar information, and part is covered by the slider. The key operating section 34 remains fully revealed.

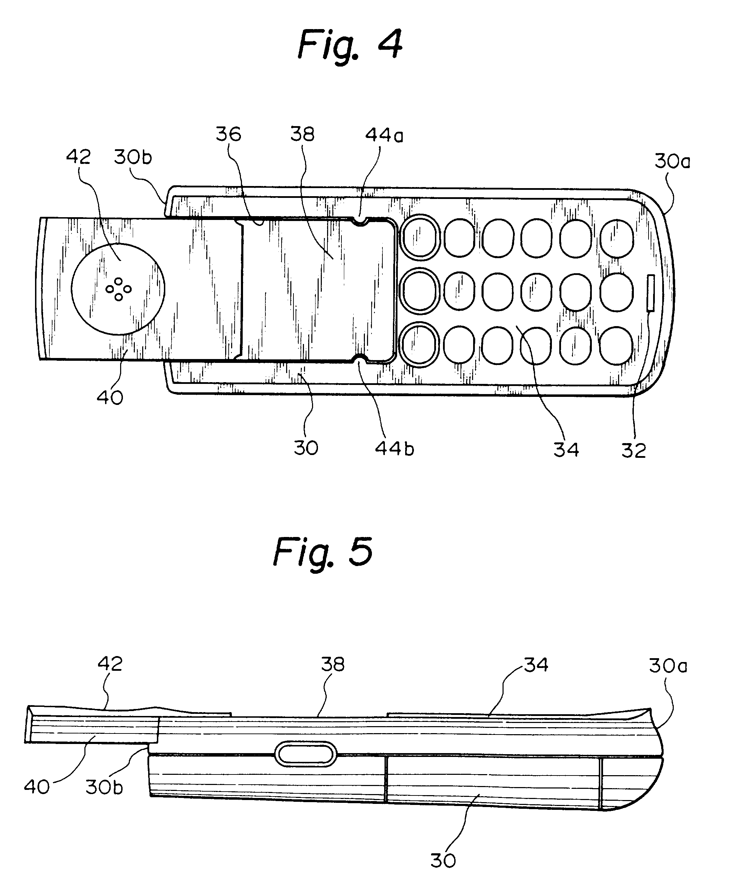

On the other hand, as shown in Figures 4 and 5, the slider 40 is pulled out of the casing when in use. Then the distance between the transmitter 32 and the receiver 42 is increased to match them in position to the user's ear and mouth, respectively. When the slider 40 is pulled out of the casing 30, substantially the entire display 38 is exposed to show many kinds of information, e.g. the number dialled and the duration of a conversation. Of course, the key operating section remains fully revealed to the user. The slider 40 can be pulled out to any desired position matching the user.

Preferably, the casing 30 is provided with a click mechanism or similar implementation for holding the slider 40 in the position pulled out of the casing 30 to thereby prevent it from slipping out.

It will be seen that the miniature portable radio communication apparatus described allows the user to freely set the distance between the transmitter and the receiver thereof which is optimal for clear conversation. This is because the movable member carrying the receiver is slidably received in the casing loaded with the transmitter and display. Moreover, such a configuration is extremely small size and, therefore, easy to carry.

In particular, even when the movable member is fully received in the casing, the user (i) can operate keys arranged on the casing, and (ii) can see a minimum amount of information, since the display is partly exposed to the outside.

## Claims

1. A miniature portable radio communication apparatus comprising a casing (30) containing one of a sound transmitter (32) and a sound receiver (42), a key operating section (34), and a display (38), and a movable member (40) containing the other of the transmitter (32) and the receiver (42) and being slidably received in the casing so as to be slidable between two extreme positions, in a first one of which the entire key operating section and substantially the entire display are revealed to the user, characterised in that in the second position of the movable member the key operating section (34) remains fully revealed, and the display (38) is partially revealed and partially covered.

2. Apparatus as claimed in claim 1, wherein the casing comprises a recess (36) extending from the center to one end of the casing in a longitudinal direction and open at the said one end, the movable member (40) being slidably received in and guided by the recess to change the distance between the transmitter and the receiver.

3. Apparatus as claimed in claim 2, wherein the display (38) is positioned on the bottom of the recess (36) which is close to the center of the casing.

4. Apparatus as claimed in claim 2 or 3, wherein the casing (30) further comprises a stop formed on each of opposite side walls of the recess (36) adjacent to the center of the casing for restricting the sliding movement of the movable member (40).

## Patentansprüche

1. Tragbares Miniaturfunkverbindungsgerät mit einem Gehäuse (30), das entweder einen Tonsender (32) oder einen Tonempfänger (42), einen Tastenbedienungsbereich (34) und eine Anzeige (38) umfaßt, und einem beweglichen Element (40), das den anderen Sender (32) oder Empfänger (42) umfaßt, und in dem Gehäuse so verschiebbar aufgenommen ist, daß es zwischen zwei äußersten Stellungen verschiebbar ist, wobei sich in einer ersten Stellung dem Benutzer der gesamte Tastenbedienungsbereich und im wesentlichen die gesamte Anzeige zeigen, dadurch gekennzeichnet, daß in der zweiten Stellung des beweglichen Elements der Tastenbedienungsbereich (34) vollständig aufgedeckt bleibt und die Anzeige (38) teilweise aufgedeckt und teilweise bedeckt ist.

2. Vorrichtung nach Anspruch 1, wobei das Gehäuse eine Aussparung (36) aufweist, die sich in einer Längsrichtung von der Mitte zu einem Ende des Gehäuses erstreckt und an dem einen Ende offen ist, wobei das bewegliche Element (40) von der Aussparung verschiebbar aufgenommen und geführt wird, um den Abstand zwischen dem Sender und dem Empfänger zu verändern.

3. Vorrichtung nach Anspruch 2, wobei die Anzeige (38) auf dem Boden der Aussparung (36), die in der Nähe der Mitte des Gehäuses ist, angeordnet ist.

4. Vorrichtung nach Anspruch 2 oder 3, wobei das Gehäuse (30) ferner einen Anschlag aufweist, der an jeder der gegenüberliegenden Seitenwände der Aussparung (36) benachbart zur Mitte des Gehäuses ausgebildet ist, um die gleitende Bewegung des beweglichen Elements (40) einzuschränken.

## Revendications

1. Appareil de communication radio portatif miniature comprenant un boîtier (30) contenant un des émetteurs de son (32) et un des récepteurs de son (42), une section fonctionnant à touches (34) et un affichage (38), et un élément mobile (40) contenant l'autre émetteur (32) et l'autre récepteur (42) et étant reçu de manière coulissante dans le boîtier afin de pouvoir coulisser entre deux positions extrêmes dans la première desquelles la section fonctionnant à touches entière et substantiellement l'affichage entier sont découverts pour l'utilisateur, caractérisé en ce que dans la seconde position de l'élément mobile, la section fonctionnant à touches (34) reste entièrement découverte, et l'affichage (38) est partiellement découvert et partiellement couvert.

2. Appareil selon la revendication 1, dans lequel le boîtier comprend un évidement (36) s'étendant depuis le centre jusqu'à une extrémité du boîtier dans une direction longitudinale et ouvert à ladite extrémité, l'élément mobile (40) étant reçu de manière coulissante dans et guidé par l'évidement pour modifier la distance entre l'émetteur et le récepteur.

3. Appareil selon la revendication 2, dans lequel l'affichage (38) est positionné au fond de l'évidement (36) qui est près du centre du boîtier.

4. Appareil selon la revendication 2 ou 3, dans lequel le boîtier (30) comprend en outre une butée formée sur chacune des parois latérales opposées de l'évidement (36) adjacent au centre du boîtier pour restreindre le mouvement coulissant de l'élément mobile (40).
